# EUROPEAN PATENT SPECIFICATION

(11) **EP 3 093 617 B1**
(45) Date of publication and mention of the grant of the patent: **13.11.2019**
(21) Application number: 16168909.6
(22) Date of filing: 10.05.2016
(51) Int. Cl.: G01C 15/10, G01B 21/16, G01C 9/06, G01B 21/24, G01M 5/00

(54) **A SYSTEM FOR DETECTION OF FOUNDATION MOVEMENT IN A WIND TURBINE**
SYSTEM ZUR DETEKTION VON FUNDAMENTBEWEGUNGEN IN EINER WINDTURBINE
SYSTÈME DE DÉTECTION DE MOUVEMENT DE FONDATION DANS UNE ÉOLIENNE

(30) Priority: 13.05.2015 DK 201500286
(43) Date of publication of application: 16.11.2016
(73) Proprietor: Scada International ApS, 7490 Aulum (DK)
(72) Inventor: BAGGER, Thomas, 8600 Silkeborg (DK); LUNDSGAARD, Marlene, 7400 Herning (DK)
(74) Representative: Rasmussen, Martin Hoffgaard

(56) References cited:
- EP-A2- 0 389 823
- US-A- 4 592 147

## Description

### Field of the invention

The present invention relates in a first aspect to a monitoring system for monitoring displacement of a wind turbine tower. In a second aspect the present invention relates to a device comprising the system according to the first aspect of the present invention. In a third aspect the present invention relates to a use of a system according to the first aspect or the use of a device according to the second aspect for monitoring displacement of a wind turbine tower. In a third aspect the present invention relates to a method for monitoring displacement of a wind turbine tower. In a fifth aspect the present invention relates to a wind turbine tower comprising the system according to the first aspect or comprising a device according to the second aspect. In a sixth aspect the present invention relates to a wind turbine comprising the wind turbine tower according to the fifth aspect.

### Background of the invention

Many engineering constructions comprise a foundation member connecting a tower structure to the ground. One example of such construction is a wind turbine. A typical wind turbine comprises an elongate tower attached to a foundation that is intended for transferring vertical loads as well as horizontal dynamic loads of the wind turbine to the ground. In order to prevent angular deflection of the foundations, a robust design of the foundations is required.

In operation, the load of the foundation can reach a critical level due to the additional load caused by the horizontal dynamic loads of the wind turbine during operation of the wind turbine. It is a significant problem if the load of the foundation is so large that the displacement between a foundation member and a base member attached to the foundation member exceeds a critical displacement limit.

In FR 2 314 478 A1 is disclosed an inclinometer having adjustable sensitivity for measuring deviations from a vertical direction of an architectural structure. The inclinometer comprises a hanging mass being suspended by a flexible strip which is fixed to an upper base. Strain gauges arranged in the vicinity of the flexible strip act as sensors for determining an inclination of the hanging mass. The mass is contained in oil. The level of the oil determines the sensitivity of the inclinometer. FR 2 314 478 A1 does not disclose that the inclinometer comprises a control unit being configured to receive displacement date from the strain gauges.

EP 0 389 823 A2 discloses a system for measuring building deformations, having plumb bobs with optionally a metal cylinder, the distance to which is sensed by contact-free distance sensors.

WO 2013/167128 A1 discloses a monitoring system configured to monitor a vertical displacement between a foundation member and a base member attached to the foundation member. The monitoring system comprises: three sensors adapted to measure displacement between the foundation member and the base member of a wind turbine tower, wherein each of the three sensors are arranged on a vertically extending rod fixed to the foundation member. A control unit is configured to receive displacement data from the sensors and to send the received displacement data to an external unit
Although the monitoring system disclosed in WO 2013/167128 A1 provides for efficient and precise monitoring of the displacement between the foundation member and the base member of a wind turbine tower, this system nevertheless presents a number of drawbacks.

One drawback is that in a situation in which the sensors are arranged on the inside of the turbine tower, it may happen that a displacement is occurring in such a way that the part of the foundation member in which the sensors are mounted breaks loose from the rest of the foundation. In such a case the system disclosed in WO 2013/167128 A1 will not detect the displacement between the foundation member and the base member.

Therefore, in order for the system disclosed in WO 2013/167128 A1 to provide accurate and precise monitoring of a displacement between a foundation member and a base member in all situations, it will be necessary to install the sensors on the outside of the wind turbine tower, such that the sensors really are being anchored into the foundation member. Only in this mode the system disclosed in WO 2013/167128 A1 will be reliable in all situations.

Installing the monitoring system of WO 2013/167128 Alon the outside of the turbine tower makes the system susceptible for effects caused by the environment such that dirt, wind, rain and ice in a detrimental way may cause the monitoring system to go out of its correct calibration; either slowly over time, or even suddenly. When such a system is out of calibration it does not provide the correct displacement data and is in fact useless.

A similar problem arises in relation to vandalism. When such a system is installed on the outside of the turbine tower, it is very much susceptible to vandalism which may cause the same type of calibration failure.

Furthermore, laser sensors may be sensitive towards distances in case insects or other small animals originating from the environment settle on the plate being sensed by the laser sensor. In such a case, the laser sensor will sense a false distance and thus provide erroneous displacement data.

Therefore, there is need for an improved system and a method that can be used to monitor the displacement between a foundation member and a base member attached to the foundation member.

Accordingly it is an object of the present invention to provide improved systems, devices, uses, methods, wind turbine towers and wind turbines for monitoring a displacement of a wind turbine tower, especially for monitoring the displacement between a foundation member and a base member attached the foundation member of a wind turbine tower.

### Brief description of the invention

This object is fulfilled with the present invention in its first, second, third, fourth, fifth and sixth aspect, respectively.

Accordingly, the present invention relates in its first aspect to a monitoring system for monitoring displacement of a wind turbine tower according to claim 1.

In its third aspect, the present invention relates to the use of a system according to the first aspect of the present invention; or of a device according to the first aspect of the present invention for monitoring displacement of a wind turbine tower.

In its fourth aspect, the present invention relates to a method for monitoring a displacement of a wind turbine tower, said method comprises:
i) providing one or more plumb bobs each comprising an upper part and a lower part; each plumb bob being configured to be pivotally suspended at its upper part, via suspension means;
ii) suspending said one or more plumb bobs from a fixing point at an inner wall of a wind turbine tower in a suspension means so as allow it/them to attain a rest position in a rest situation;
iii) providing two or more sensors, each being configured to sense, in a specific sensing direction, a distance to a plumb bob, and thereby provide a displacement data;
iv) arranging said two or more sensors in a sensing vicinity of a plumb bob in such a way that at least two of said sensing directions are not parallel to each other;
v) providing a control unit which is configured to receive said displacement data from two or more of said sensors; and
vi) allowing said control unit to automatically report to an external unit, a parameter representing a displacement of a wind turbine tower.

In its fifth aspect, the present invention relates to wind turbine tower comprising a system according to according to the first aspect of the present invention; or comprising a device according to the second aspect of the present invention

In its sixth aspect, the present invention relates to a wind turbine comprising a wind turbine tower according to the fifth aspect of the present invention
The present invention in its various aspects provides for a monitoring system, devices, uses and methods which are more reliable, less prone to environmental impacts and impact due to vandalism, which is in essence maintenance free and easier to install.

### Brief description of the figures

Fig. 1 is a cross-sectional view of a monitoring system according to the first aspect of the present invention and being installed at an inner wall of a wind turbine tower.
Fig. 2a is a perspective view illustrating the configuration of a plumb bob and three associated sensors according to one embodiment of the first aspect of the present invention.
Fig. 2b is a plane view seen from above illustrating the configuration of a plumb bob and three associated sensors of Fig. 2a.
Fig. 3 is a plane view seen from above and illustrating the configuration of a plumb bob and two associated sensors according to one embodiment of the first aspect of the present invention.
Fig. 4 is a plane view seen from above and illustrating the configuration of two plumb bobs and two associated sensors according to one embodiment of the first aspect of the present invention.
Fig 5 is a side view illustrating the principle of damping of vibration movement of a plumb bob by submerging it into a liquid.
Fig. 6 illustrates one embodiment of a device according to the second aspect of the present invention.

### Detailed description of the invention

### The first aspect of the present invention

In its first aspect the present invention relates to a monitoring system for monitoring displacement of a wind turbine tower is provided according to claim 1.

By arranging each plumb bob in the vicinity of a sensor in a specific distance in a sensing direction of that sensor, it will be possible to monitor any displacement of that plumb bob in relation to that specific sensor. By making sure that the sensing directions of the two or more sensing direction are not parallel, it is ensured that a displacement can be monitored in relation to any direction. In case the suspension means are having a specifically short length and by ensuring that the plumb bob(s) is/are suspended in a lower part of the wind turbine tower one can make sure that the monitoring system is monitoring a displacement between a foundation member and a base member, rather than just monitoring vibrations or bends of the wind turbine tower.

In the present description and in the appended claims it shall be understood that a foundation member may be any type of foundation, e.g. a concrete foundation for a wind turbine. The base member may be any base member of the wind turbine tower construction. Under normal operation conditions of the wind turbine, the base member is connected to the foundation member.

In the present description and in the appended claims the term "displacement of a wind turbine tower" shall preferably be interpreted to specifically mean a displacement or deflection of the wind turbine tower which will result in a situation in which the turbine tower will have an inclination or slope relative to the vertical direction, which is different from the original and/or intended vertical direction. In particular, in the present description and in the appended claims the term "displacement of a wind turbine tower" shall be interpreted to mean a displacement between a foundation member and a base member of a wind turbine tower.

In one aspect of the monitoring system, one or more of said one or more plumb bobs at least partly comprising a cylindrical sensing surface, wherein said plumb bob is configured to be suspended in such a way that the direction of gravity is parallel to an axial direction of the cylindrical surface when being suspended in a rest position.

Using such cylindrical plumb bobs is advantageous in some embodiments, for example where one plumb bob and three sensors are being used.

In the present description and in the appended claims, a rest position shall be interpreted as a position in which the wind turbine tower is not displaced in any direction and in which there is no displacement between a foundation member and a base member of the wind turbine tower.

In one aspect of the monitoring system, one or more of said one or more plumb bobs at least partly comprises two planar sensing surfaces, said two planar sensing surfaces preferably being perpendicular to each other.

Such an aspect is advantageous in case one plumb bob and two sensors are being used in the monitoring system.

In one embodiment of the monitoring system according to the first aspect of the present invention the number of plumb bobs being 1, 2, 3 or 4.

By this number of plumb bob a fine balance of accuracy and simplicity of the monitoring system is ensured.

In one embodiment of the monitoring system according to the first aspect of the present invention the number of sensors being 2, 3, 4 or 5.

By this number of sensors a fine balance of accuracy and simplicity of the monitoring system is ensured.

In one aspect of the monitoring system according to the first aspect of the present invention the angle between sensing direction of any two of said two or more sensors is independently selected from the range of 65 - 140°, such as 70 - 135°, for example 75 - 130°, e.g. 80 - 125°, such as 85 - 120°, for example 90 - 115°, e.g. 95 - 110° or 100 - 105°.

These angles provide a sufficient degree of "non-parallel" sensing directions which in turn provides for accurate determinations of displacement of a wind turbine tower.

In one embodiment of the monitoring system according to the first aspect of the present invention said system comprises one and only one plumb bob; and said system comprises three sensors which are being arranged in an equilateral triangle around said plumb bob when being arranged in a rest position.

Such a configuration of the plumb bob and sensors will provide accurate determinations of displacement of a wind turbine tower and yet still be of a quite simple design.

In one embodiment of the monitoring system according to the first aspect of the present invention said system comprises one and only one plumb bob; and two sensors.

These configurations of the plumb bob and sensors will provide accurate determinations of displacement of a wind turbine tower and yet still be of a quite simple design.

In one embodiment of the monitoring system according to the first aspect of the present invention said suspension means independently comprising: a string or a rod; or a combination of a string and a rod; such as an upper rod and a lower string, or an upper string and a lower rod; for suspending one or more of said one or more plumb bobs.

Use of a string as the suspension means provides for a simple design. However, in order to dampen any potential vibrations in the suspension means it may be advantageous to include a rod in the suspension means.

In one embodiment of the monitoring system according to the first aspect of the present invention one or more of said one or more sensors independently being selected from the group comprising an inductive sensor, a laser sensor or a magnetic sensor.

These types of sensors provide for a simple and yet accurate measurements of a displacement between a foundation member and a base member of a wind turbine tower.

In one aspect of the monitoring system according to the first aspect of the present invention the length of the suspension means being adjusted so as to provide radius of pivotally movement of the plumb bob of 0.5 - 8.0 m, such as 1.0 - 7.5 m, for example 1.5 - 7.0 m, e.g. 2.0 - 6.5 m, for example 2.5 - 6.0 m, such as 3.0 - 5.5 mm, for example 3.5 - 5.0 m or 4.0 - 5.0 m.

These radii of the pivotally movement of the plumb bob provides for accurate determinations of a displacement between a foundation member and a base member of a wind turbine tower.

In the present description and in the appended claims the term "radius of pivotally movement of the plumb bob" shall be construed to mean the distance from the fixing point of the suspension means to a point on the sensing surface of the plumb bob being sensed by a sensor.

In one embodiment of the monitoring system according to the first aspect of the present invention the system is configured in such a way that the parameter(s) representing displacement of a wind turbine tower and to be reported to an external unit relate(s) to magnitude of movement and/or direction of movement.

These parameters provide for the necessary features of the displacement, to be monitored, between a foundation member and a base member of a wind turbine tower.

In one embodiment of the monitoring system according to the first aspect of the present invention and in respect of one or more of said plumb bobs, said system furthermore comprising a container comprising a liquid and being configured to at least partly accommodate a lower part of one or more of said one or more plumb bobs in order to dampen any movements of the plumb bob being of a vibrational nature.

Such a set-up comprising container with a liquid will allow filtering off any vibrational movement of the plumb bob which do not relate to any displacement between a foundation member and a base member of the wind turbine tower.

In one embodiment this embodiment the viscosity of said liquid is selected from the range of 50-120 mPa·s, such as 55 - 115 mPa·s, for example 60 - 110 mPa·s, e.g. 65 - 105 mPa·s, such as 70 - 100 mPa·s, such as 75 - 95 mPa·s, for example 80 - 90 mPa·s.

Such liquid may be selected amongst mineral oil or synthetic oils or mixtures thereof, optionally also comprising one or more diluters or solvents.

In one embodiment of the monitoring system according to the first aspect of the present invention said system is configured to automatically reporting to an external unit, an alert in case a predetermined alert criteria is meet; said alert criteria optionally relating to a specific magnitude of displacement of a wind turbine tower.

Such a system allows an operator of a wind turbine to take action in case a critical magnitude of displacement of a wind turbine tower is encountered.

In one embodiment of the monitoring system according to the first aspect of the present invention said external unit being an internet server adapted to receive and store said parameter(s) representing displacement of a wind turbine tower.

In one embodiment of the monitoring system according to the first aspect of the present invention said control unit is configured to be reachable remotely via an Internet Protocol connection (IP connection), UMTS (Universal Mobile Telecommunications System) connection, or via a fiber optic network.

This embodiment ensures the monitoring of the displacement of a wind turbine tower anywhere which provides access to such connections.

In one embodiment of the monitoring system according to the first aspect of the present invention, said system further comprising one or more sensor mounting brackets for mounting said two or more sensors.

Mounting brackets for the sensors ensure sturdy mounting of the sensors and hence provides for accurate measurements.

In one embodiment of the monitoring system according to the first aspect of the present invention, said system further comprising one or more brackets for fixation of said one or more suspension means.

Mounting brackets for the suspension means ensure a correct and optimum location of the suspended plumb bobs and hence provides for accurate measurements.

In one embodiment of the monitoring system according to the first aspect of the present invention the one or more of said two or more sensors comprises position adjustment means for adjustment or calibration of the position of said sensors, said adjustment means optionally being configured to allow adjustment or calibration in one, two or three dimensions.

This system ensures fast and easy set-up and calibration of the sensors and the monitoring system per se.

### The second aspect of the present invention

In its second aspect the present invention relates to a device according to claim 7.

Such a device ensures easy mounting and set-up of the monitoring system. Further, such a device ensures that no unauthorized access to the delicate monitoring system is available once mounted on an inner wall of a wind turbine tower.

In one embodiment of the device according to the second aspect of the present invention, said housing comprises one or more mounting means for mounting said housing onto an inner wall of a wind turbine tower.

In one embodiment of the device according to the second aspect of the present invention, said one or more of said one or more mounting means comprises one or more magnets.

These embodiments ensure easy mounting and set-up of the monitoring system.

In one embodiment of the device according to the second aspect of the present invention, said housing is a closed housing comprising one or more inspection hatches for providing access to the interior of said housing.

Inspection hatches for providing access to the interior of said housing ensures that the monitoring system housed within the housing may be easily inspected.

In one embodiment of the device according to the second aspect of the present invention, said housing comprises:
- a lower part comprising said one or more plumb s bobs and said two or more sensors;
- and a tubular upper part extending in a vertical direction from an opening in an upper wall of said lower part;
wherein said suspension means being pivotally fixed at an fixing point at an upper part of said tubular upper part, thereby allowing said tubular upper part to accommodate said suspension means.

This design of the device ensures easy mounting and set-up of the monitoring system and at the same time allows enclosure of one or more plumb bods being suspended in a suspension means having relatively long extension.

### The third aspect of the present invention

In its third aspect the present invention relates to the use of a system according to claim 1 or of a device according to claim 7.

In one embodiment of the use according to the third aspect of the present invention said use relates to monitoring a displacement between a base member and a foundation member of a wind turbine tower.

This embodiment ensures monitoring of the integrity of the connection between a base member and a foundation member of a wind turbine tower.

### The fourth aspect of the present invention

In its fourth aspect the present invention relates to a method according to claim 11.

In one embodiment of the use according to the fourth aspect of the present invention said method automatically reports an alert in case a predetermined alert criterion is meet; said alert criteria optionally relating to a specific magnitude of displacement of a wind turbine tower.

Such a method allows an operator of a wind turbine to take action in case a critical magnitude of displacement of a wind turbine tower is encountered.

In one embodiment of the use according to the fourth aspect of the present invention, said method being performed by using a system according to the first aspect of the present invention or by using a device according to the second aspect of the present invention.

### The fifth aspect of the present invention

In its fifth aspect the present invention relates to a wind turbine tower comprising a system according to claim 1 or comprising a device according to claim 7.

In one aspect of the use according to the fifth aspect of the present invention said system or said device being arranged in a lower part of said wind turbine tower, such as at a height of 30 % or lower of the total height of the wind turbine tower, for example at a height of 25 % or lower of the total height of the wind turbine tower, e.g. at a height of 20 % or lower of the total height of the wind turbine tower, such as at a height of 15% or lower of the total height of the wind turbine tower, for example at a height of 10 % or lower of the total height of the wind turbine tower or at a height of 5 % or lower of the total height of the wind turbine tower.

It is preferred that the sensors and the plumb bob(s) are being arranged in a lower part of the wind turbine tower, such as at a lower 0.5 - 5.0 m of the wind turbine tower, such as at a lower 1.0 - 4.5 m of the wind turbine tower, for example at a lower 1.5 - 4.0 m of the wind turbine tower, such as at a lower 2.0 - 3.5 m of the wind turbine tower, or at a lower 2.5 - 3.0 m of the wind turbine tower.

### The sixth aspect of the present invention

In its sixth aspect the present invention relates to a wind turbine comprising a wind turbine tower according to claim 15.

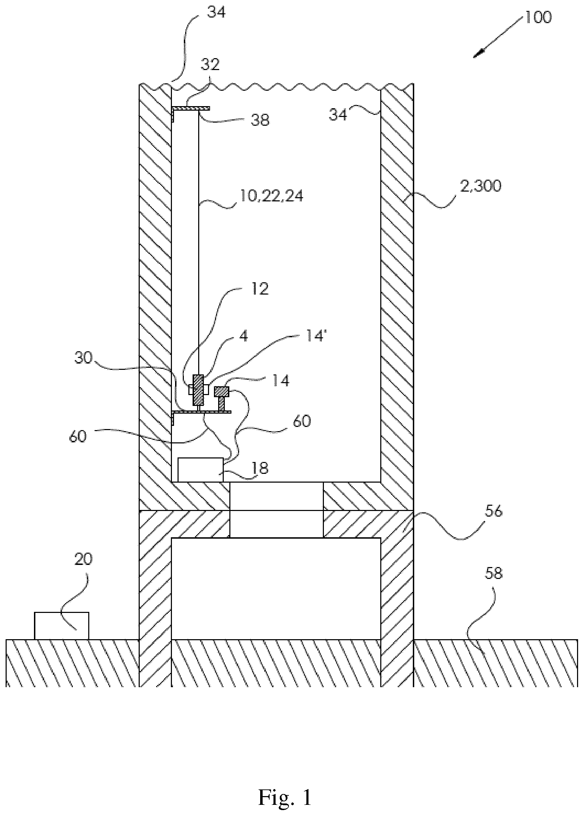

Referring now to the drawings for illustrating the present invention, Fig. 1 is a cross-sectional view of a monitoring system 100 according to the first aspect of the present invention and being installed at an inner wall 34 of a wind turbine tower 2,300. The monitoring system comprises:
- one plumb bob 4 comprising an upper part 6 and a lower part 8; said plumb bob being pivotally suspended at its upper part, via suspension means 10, from a point above so as to attain a rest position in a rest situation; said plumb bobs comprising a sensing surfaces 12.

The plumb bob 4 is suspended in suspension means 10 from a point above in a fixing point 38.

The system furthermore comprises two sensors 14,14', each being configured to sense, in a specific sensing direction 16,16', a distance to the plumb bob, and thereby provide a displacement data.

The sensors 14,14' being arranged in a sensing vicinity of a plumb bob.

In the system in fig. 1 at least two of the specific sensing directions 16, 16' are not being parallel to each other. The sensors 14,14' are being arranged on bracket 30.

The monitoring system illustrated in Fig. 1 furthermore comprises a control unit 18 which is configured to receive said displacement data from two or more of said sensors. The sensors 14,14' are connected to the control unit 18 via connecting wires 60.

In fig. 1 the plumb bob 4 attains a rest position which is located vertically below the fixing point 38 for the suspension means 10. The suspension means is suspended from a bracket 32.

The rest position of the plumb bob 4 resting in a rest situation will imply that the sensors 14,14' will sense the sensing distance to the sensing surfaces 12,12' and the control unit will optionally be configured to interpret these sensing distances to a displacement of the wind turbine tower 2,300 of zero (0).

In case the wind turbine tower is subjected to a displacement, in such a way that the wind turbine tower is not any longer vertically arranged, the plumb bob will continuously be vertically suspended in the suspension means from the fixing point 38. However, in such a situation, the plumb bob will have moved in relation to the sensors 14,14'. Accordingly, in such a displacement situation, at least one of the sensors 14,14' will sense a different sensing direction commensurate with degree of displacement of the wind turbine tower.

Subsequently, the control unit will optionally be configured to interpret these altered sensing distances to a displacement of the wind turbine tower 2,300 which is non-zero.

Such a non-zero displacement of the wind turbine tower 2,300 may subsequently be reported to the external unit 20. For the sake of simplicity, the external unit 20 is in the figures depicted as being located in the vicinity to the turbine tower. However, in reality the external unit 20 may be located at a distant location.

The suspension means 10 may comprise a string 22 or a rod 24 or a combination thereof.

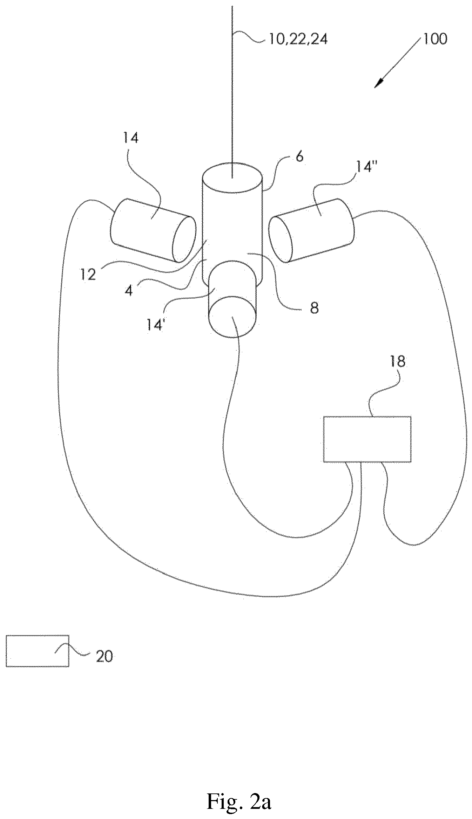

Fig. 2a is a perspective view illustrating an alternative configuration of a plumb bob 4 and three associated sensors 14,14',14" according to one embodiment of the first aspect of the present invention. In this configuration, the plumb bob 4 is suspended so as to be located in the center of an equilateral triangle when said plumb bob being arranged in a rest position.

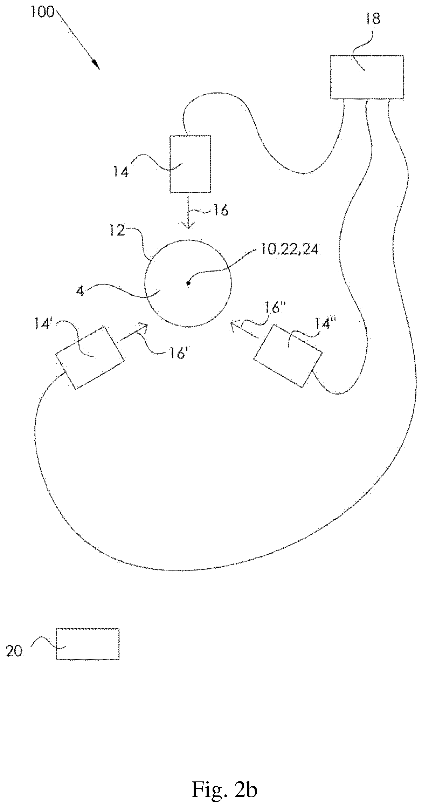

Fig. 2b is a plane view seen from above illustrating the configuration of a plumb bob and three associated sensors of Fig. 2a.

Fig. 2b shows that the plumb bob 4 comprises a sensing surface 12. Each sensor 14.14',14" will sense in a specific sensing direction 16,16',16" towards the sensing surface 12 of the plumb bob 4. It is noted that the sensing directions 16,16',16" are mutually non-parallel.

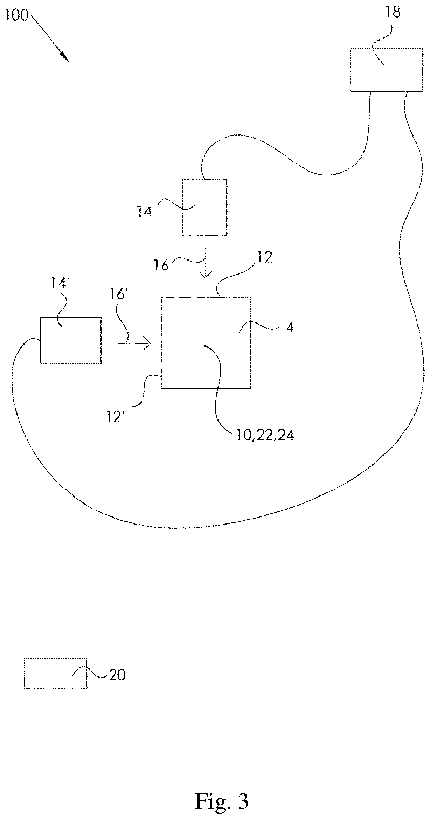

Fig. 3 is a plane view seen from above and illustrating the configuration of a plumb bob and two associated sensors according to one embodiment of the first aspect of the present invention.

Fig. 3 shows that the plumb bob 4 comprises two sensing surfaces 12,12'. Each sensor 14.14' will sense in a specific sensing direction 16,16' towards the sensing surface 12,12 of the plumb bob 4. It is noted that the sensing directions 16,16'are mutually perpendicular.

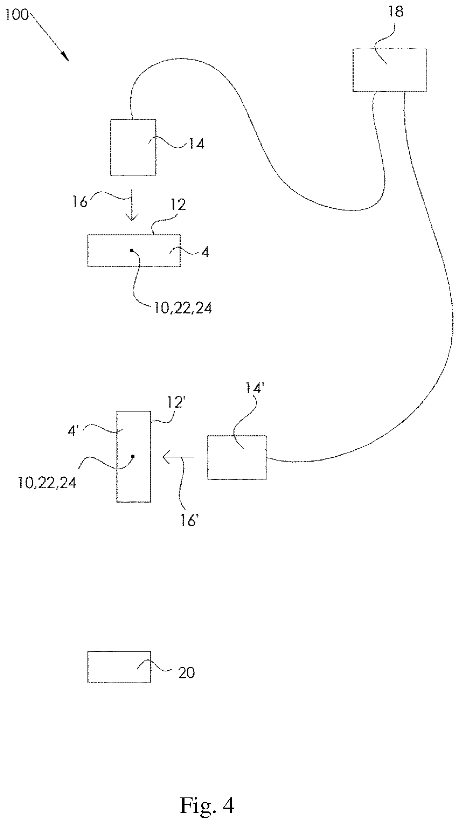

Fig. 4 is a plane view seen from above and illustrating the configuration of two plumb bobs 4,4' and two associated sensors 14,14' according to one embodiment of the first aspect of the present invention.

Fig. 4 shows that the plumb bob 4 comprises a sensing surface 12 and that the plumb bod 4' comprises a sensing surface 12'. Each sensor 14,14' will sense in a specific sensing direction 16,16' towards the sensing surface 12,12 of one of the plumb bobs 4, 4'. It is noted that the sensing directions 16,16' are mutually perpendicular. Accordingly, one sensor 14 will sense a displacement in one direction 16 and the other sensor 14' will sense a displacement in a direction16' which is perpendicular to the sensing direction 16.

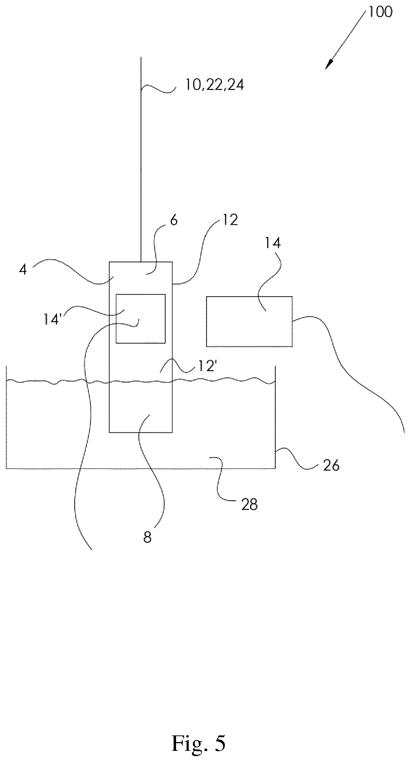

Fig. 5 is a side view illustrating the principle of damping of vibration movement of a plumb bob 4 by submerging it into a liquid. In fig 5 is seen one plumb bob 4 suspended in a suspension means 10. The plumb bob 4 comprises two sensing surfaces 12, 12'. Two sensors 14,14' are each individually sensing a distance to a specific sensing surface 12.12' of the plumb bob. In order to dampen any vibrational movement of the plumb bob 4, the plumb bob being partly submerged into a liquid 28 contained in a container 26.

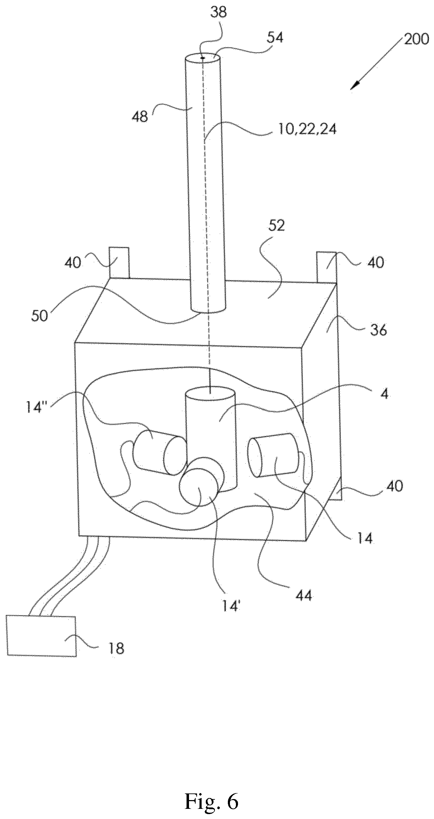

Fig. 6 illustrates one embodiment of a device 200 according to the second aspect of the present invention. The device 200 is for mounting on an inner wall 34 of a wind turbine tower 2,300 and for monitoring displacement of said wind turbine tower.

The device 200 comprises the monitoring system according to the first aspect of the present invention.

In the device 200 the plumb bob 4 and the three sensors 14,14',14" are being enclosed within a housing 36.

The housing 36 comprises a lower part 46 comprising said plumb s bob 4 and three sensors 14,14',14".

The housing 36 furthermore comprises a tubular upper part 48 extending in a vertical direction from an opening 50 in an upper wall 52 of the lower part 46 of the housing.

The suspension means 10 are being pivotally fixed at an fixing point 38 at an upper part 54 of said tubular upper part 48, thereby allowing said tubular upper part to accommodate said suspension means 10.

The device 200 allows for easy and fast installation of the system contained therein. Furthermore, as the device is enclosed in an enclosure or housing, the delicate and sensitive nature of the sensors and the sensing mechanism in general can be kept isolated from the interior of the wind turbine tower thereby avoiding a technician's unintentional touching and modification of the calibration of the system.

It may be preferred that the device 200 comprises one or more mounting means 40 for easy installation onto an inner wall of the wind turbine tower 2,300. It is preferred that such mounting means comprises one or more magnets.

In one embodiment the housing 36 is a closed housing optionally comprising one or more inspection hatches 42 for providing access to the interior 44 of said housing 36.

In the present application it should be understood that any embodiment mentioned in respect of any one aspect of the present invention may equally well apply to any embodiment of any other aspect of the invention to the extent that such an embodiment is feasible.

### List of reference numerals

- 2: Wind turbine tower
- 4,4': Plumb bob
- 6: Upper part of plumb bob
- 8: Lower part of plumb bob
- 10: Suspension means
- 12,12': Sensing surface of plumb bob
- 14,14',14": Sensor
- 16,16',16": Sensing direction
- 18: Control unit
- 20: External unit
- 22: String
- 24: Rod
- 26: Container
- 28: Liquid
- 30: Mounting bracket for sensor
- 32: Bracket for fixation of suspension means.
- 34: Inner wall of wind turbine tower
- 36: Housing of device
- 38: Fixing point for suspension means
- 40: Mounting means for device
- 42: Inspection hatch
- 44: Interior of housing
- 46: Lower part of housing
- 48: Tubular upper part of housing
- 50: Opening in housing
- 52: Upper wall of lower part of housing
- 54: Upper part of tubular upper part of housing
- 56: Base member of a wind turbine tower
- 58: Foundation member of a wind turbine tower
- 60: Connecting wire
- 100: Monitoring system
- 200: Device
- 300: Wind turbine tower
- 400: Wind turbine

## Claims

1. A monitoring system (100) for monitoring displacement of a wind turbine tower (2), said monitoring system comprises:
- one or more plumb bobs (4,4') each comprising an upper part (6) and a lower part (8); each plumb bob being configured to be pivotally suspended at its upper part, via suspension means (10), from a point above so as to attain a rest position in a rest situation; each said plumb bobs comprising one or more sensing surfaces (12,12');
- one or more suspension means (10) for suspending said one or more plumb bobs (4);
- two or more sensors (14,14',14"), each being configured to sense, in a specific sensing direction (16,16',16"), a distance to said one or more plumb bobs, and thereby provide a displacement data;
wherein at least two of said two or more sensors (14,14',14") are arranged in a sensing vicinity of said one or more plumb bobs; wherein at least two of said specific sensing directions (16,16',16") are not being parallel to each other;
**characterized in that**
said monitoring system furthermore comprises a control unit (18) configured to receive said displacement data from two or more of said sensors; and
wherein said system furthermore comprises means for reporting to an external unit (20), parameter(s) representing displacement of the wind turbine tower.

2. A monitoring system (100) according to claim,1 wherein the number of plumb bobs (4,4') is 1, 2, 3 or 4; and/or wherein the number of sensors (14,14',14") is 2, 3, 4 or 5 .

3. A monitoring system (100) according to claim 1 or 2, wherein said system comprises one and only one plumb bob (4); and wherein said system comprises three sensors (14,14',14") arranged in an equilateral triangle around said plumb bob when being arranged in a rest position; or wherein said system comprises one and only one plumb bob (4); and two sensors (14,14',14").

4. A monitoring system (100) according to any of the preceding claims, wherein said suspension means (10) independently comprises:
a string (22) or a rod (24); or a combination of a string (22) and a rod (24); such as an upper rod (24) and a lower string (22), or an upper string (22) and a lower rod (24); for suspending one or more of said one or more plumb bobs (4,4').

5. A monitoring system (100) according to any of the claims 1 -4, wherein said system is configured to automatically reporting to an external unit (20), an alert in case a predetermined alert criteria is meet; said alert criteria optionally relating to a specific magnitude of displacement of the wind turbine tower.

6. A monitoring system (100) according to any of the claims 1 -5, wherein said external unit (20) is an internet server adapted to receive and store said parameter(s) representing displacement of the wind turbine tower (2).

7. A device (200) adapted to be mounted on an inner wall (34) of a wind turbine tower (2) and for monitoring displacement of said wind turbine tower; said device comprises a monitoring system (100) according to any of the claims 1 - 6;
- wherein said one or more plumb bobs (4,4') and said two or more sensors (14,14',14") are being enclosed within a housing (36), and wherein said one or more plumb bobs (4,4') are being pivotally suspended in said suspension means (10) from an upper part of said housing at a fixing point (38) thereof.

8. A device (200) according to claim 7, wherein said housing (36) comprises one or more mounting means (40) for mounting said housing onto an inner wall of a wind turbine tower (2), said one or more of said one or more mounting means (40) optionally comprises one or more magnets .

9. A device (200) according to any of the claims 7 - 8, wherein said housing comprises:
- a lower part (46) comprising said one or more plumb bobs (4,4') and said two or more sensors (14,14',14");
- and a tubular upper part (48) extending in a vertical direction from an opening (50) in an upper wall (52) of said lower part (46);
wherein said suspension means (10) being pivotally fixed at an fixing point (38) at an upper part (54) of said tubular upper part (48), thereby allowing said tubular upper part to accommodate said suspension means (10).

10. Use of a system (100) according to any of the claims 1 - 6 or of a device (200) according to any of the claims 7 - 9 for monitoring displacement of a wind turbine tower (2), preferably for determining a displacement between a base member (56) and a foundation member (58) of a wind turbine tower (2).

11. A method for monitoring a displacement of a wind turbine tower (2), said method comprises:
i) providing one or more plumb bobs (4,4') each comprising an upper part (6) and a lower part (8); each plumb bob being configured to be pivotally suspended at its upper part, via suspension means (10);
ii) suspending said one or more plumb bobs (4,4') from a fixing point (38) at an inner wall (34) of a wind turbine tower (2) in a suspension means (10) so as allow it/them to attain a rest position in a rest situation;
iii) providing two or more sensors (14,14',14"), each being configured to sense, in a specific sensing direction (16, 16',16"), a distance to said one or more plumb bobs (4,4'), and thereby provide a displacement data;
iv) arranging said two or more sensors (14,14',14") in a sensing vicinity of said one or more plumb bobs (4,4') in such a way that at least two of said sensing directions (16, 16',16") are not parallel to each other;
**characterized in that** the method further comprises:
v) providing a control unit (18) which is configured to receive said displacement data from two or more of said sensors (14,14',14"); and
vi) allowing said control unit to automatically report to an external unit (20), a parameter representing a displacement of the wind turbine tower (2).

12. A method according to claim 11, wherein said method automatically reports an alert in case a predetermined alert criteria is meet; said alert criteria optionally relating to a specific magnitude of displacement of the wind turbine tower (20).

13. A method according to claim 11 or 12 performed by using a system (100) according to any of the claims 1 - 6 or by using a device (200) according to any of the claims 7 - 9.

14. A wind turbine tower (300) comprising a system (100) according to any of the claims 1 - 6, or comprising a device (200) according to any of the claims 7 - 9.

15. A wind turbine (400) comprising a wind turbine tower (300) according to claim 14.

## Patentansprüche

1. Überwachungssystem (100) zur Überwachung der Auslenkung eines Windturbinenturms (2), wobei das Überwachungssystem Folgendes umfasst:
- ein oder mehr Lote (4,4'), die jeweils einen oberen Teil (6) und einen unteren Teil (8) umfassen; wobei jedes Lot so ausgebildet ist, das es an seinem oberen Teil über Aufhängemittel (10) von einem Punkt oberhalb schwenkbar aufgehängt ist, sodass es in einer Ruhesituation eine Ruhestellung erreicht; wobei jedes Lot eine oder mehr Erfassungsflächen (12,12') umfasst;
- ein oder mehr Aufhängemittel (10) zum Aufhängen des einen oder der mehreren Lote (4);
- zwei oder mehr Sensoren (14,14',14"), die jeweils so ausgebildet sind, dass sie in einer spezifischen Erfassungsrichtung (16,16',16") einen Abstand zu dem einen oder den mehreren Loten erfassen und dadurch Auslenkungsdaten erzeugen;
wobei wenigstens zwei der zwei oder mehr Sensoren (14,14',14") in einer Erfassungsnähe des einen oder der mehreren Lote angeordnet sind;
wobei wenigstens zwei der spezifischen Erfassungsrichtungen (16,16',16") nicht parallel zueinander sind;
**dadurch gekennzeichnet, dass** das Überwachungssystem weiter eine Steuereinheit (18) umfasst, die so ausgebildet ist, dass sie die Auslenkungsdaten von zwei oder mehr der Sensoren empfängt; und
wobei das System weiter Mittel zum Melden eines Parameters (von Parametern), welche(r) die Auslenkung des Windturbinenturms darstellt/darstellen, an eine externe Einheit (20) umfasst.

2. Überwachungssystem (100) nach Anspruch 1, wobei die Zahl der Lote (4,4') 1, 2, 3 oder 4 beträgt und/oder wobei die Zahl der Sensoren (14,14',14") 2, 3, 4 oder 5 beträgt.

3. Überwachungssystem (100) nach Anspruch 1 oder 2, wobei das System ein und nur ein Lot (4) umfasst und wobei das System drei Sensoren (14,14',14") umfasst, die in einem gleichseitigen Dreieck um das Lot angeordnet sind, wenn dieses in einer Ruheposition angeordnet ist; oder wobei das System ein und nur ein Lot (4) und zwei Sensoren (14,14',14") umfasst.

4. Überwachungssystem (100) nach einem der vorstehenden Ansprüche, wobei das Aufhängemittel (10) unabhängig Folgendes umfasst:
eine Schnur (22) oder eine Stange (24); oder eine Kombination aus einer Schnur (22) und einer Stange (24); wie eine obere Stange (24) und eine untere Schnur (22), oder eine obere Schnur (22); und eine untere Stange (24) zum Aufhängen eines oder mehr des einen oder der mehreren Lote (4,4').

5. Überwachungssystem (100) nach einem der Ansprüche 1 -4, wobei das System so ausgebildet ist, dass es in demjenigen Fall, in dem ein vorbestimmtes Alarmkriterium erfüllt ist, einen Alarm an eine externe Einheit (20) automatisch meldet; wobei das Alarmkriterium optional mit einer spezifischen Größe der Auslenkung des Windturbinenturms im Zusammenhang steht.

6. Überwachungssystem (100) nach einem der Ansprüche 1 -5, wobei es sich bei der externen Einheit (20) um einen Internetserver handelt, der so angepasst ist, dass er den (die) Parameter empfängt und speichert, welche die Auslenkung des Windturbinenturms (2) darstellen.

7. Vorrichtung (200), die zur Montage an einer Innenwand (34) eines Windturbinenturms (2) und zur Überwachung der Auslenkung des Windturbinenturms angepasst ist; wobei die Vorrichtung ein Überwachungssystem (100) nach einem der Ansprüche 1 - 6 umfasst;
- wobei ein oder mehr Lote (4,4') und zwei oder mehr Sensoren (14,14',14") innerhalb eines Gehäuses (36) eingeschlossen sind und wobei das eine oder die mehreren Lote (4,4') im Aufhängemittel (10) von einem oberen Teil des Gehäuses an einem Befestigungspunkt (38) davon schwenkbar aufgehängt sind.

8. Vorrichtung (200) nach Anspruch 7, wobei das Gehäuse (36) ein oder mehr Montagemittel (40) zum Montieren des Gehäuses auf einer Innenwand eines Windturbinenturms (2) umfasst, wobei ein oder mehr des einen oder der mehreren Montagemittel (40) optional ein oder mehr Magnete umfassen.

9. Vorrichtung (200) nach einem der Ansprüche 7 - 8, wobei das Gehäuse Folgendes umfasst:
- einen unteren Teil (46), der ein oder mehr Lote (4,4') und die zwei oder mehr Sensoren (14,14',14") umfasst;
- und einen röhrenförmigen oberen Teil (48), der sich in einer vertikalen Richtung von einer Öffnung (50) in einer oberen Wand (52) des unteren Teils (46) erstreckt;
wobei das Aufhängemittel (10) an einem Befestigungspunkt (38) an einem oberen Teil (54) des röhrenförmigen oberen Teils (48) schwenkbar befestigt ist, wodurch der röhrenförmige obere Teil das Aufhängemittel (10) aufnehmen kann.

10. Verwendung eines Systems (100) nach einem der Ansprüche 1 - 6 oder einer Vorrichtung (200) nach einem der Ansprüche 7 - 9 zur Überwachung der Auslenkung eines Windturbinenturms (2) vorzugsweise zur Bestimmung einer Auslenkung zwischen einem Sockelelement (56) und einem Fundamentelement (58) eines Windturbinenturms (2).

11. Verfahren zur Überwachung einer Auslenkung eines Windturbinenturms (2), wobei das Verfahren Folgendes umfasst:
i) das Bereitstellen eines oder mehr Lote (4,4'), die jeweils einen oberen Teil (6) und einen unteren Teil (8) umfassen; wobei jedes Lot dazu ausgebildet ist, über Aufhängemittel (10) an seinem oberen Teil schwenkbar aufgehängt zu werden;
ii) das Aufhängen des einen oder der mehreren Lote (4,4') von einem Befestigungspunkt (38) an einer Innenwand (34) eines Windturbinenturms (2) in einem Aufhängemittel (10), um ihm/ihnen zu ermöglichen, in einer Ruhesituation eine Ruheposition zu erreichen;
iii) das Bereitstellen von zwei oder mehr Sensoren (14,14',14"), die jeweils so ausgebildet sind, dass sie in einer spezifischen Erfassungsrichtung (16, 16', 16") einen Abstand zu dem einen oder den mehreren Loten (4,4') erfassen und dadurch Auslenkungsdaten erzeugen;
iv) das Anordnen der zwei oder mehr Sensoren (14,14',14") in einer Erfassungsnähe des einen oder der mehreren Lote (4,4') so, dass wenigstens zwei der Erfassungsrichtungen (16, 16',16") nicht parallel zueinander sind;
**dadurch gekennzeichnet, dass** das Verfahren weiter umfasst:
v) das Bereitstellen einer Steuereinheit (18), die so ausgebildet ist, dass sie die Auslenkungsdaten von zwei oder mehr der Sensoren (14,14',14") empfängt; und
vi) das Zulassen des automatischen Meldens eines Parameters, der eine Auslenkung des Windturbinenturms (2) darstellt, von der Steuereinheit an eine externe Einheit (20).

12. Verfahren nach Anspruch 11, wobei das System in einen Alarm automatisch meldet, wenn ein vorbestimmtes Alarmkriterium erfüllt ist; wobei das Alarmkriterium optional mit einer spezifischen Größe der Auslenkung des Windturbinenturms (20) im Zusammenhang steht.

13. Verfahren nach Anspruch 11 oder 12, das durchgeführt wird, indem ein System (100) nach einem der Ansprüche 1 - 6 verwendet wird oder indem eine Vorrichtung (200) nach einem der Ansprüche 7 - 9 verwendet wird.

14. Windturbinenturm (300), umfassend ein System (100) nach einem der Ansprüche 1 - 6 oder umfassend eine Vorrichtung (200) nach einem der Ansprüche 7 - 9.

15. Windturbine (400), umfassend einen Windturbinenturm (300) nach Anspruch 14.

## Revendications

1. Système de surveillance (100) pour surveiller le déplacement d'une tour d'éolienne (2), ledit système de surveillance comprend :
- un ou plusieurs fils à plomb (4, 4') comprenant chacun une partie supérieure (6) et une partie inférieure (8) ; chaque fil à plomb étant configuré pour être suspendu de manière pivotante au niveau de sa partie supérieure, via un moyen de mise en suspension (10), à partir d'un point situé au-dessus de manière à atteindre une position de repos dans une situation de repos ; chacun desdits fils à plomb comprenant une ou plusieurs surfaces de détection (12, 12') ;
- un ou plusieurs moyens de mise en suspension (10) pour suspendre lesdits un ou plusieurs fils à plomb (4) ;
- deux ou plus de deux capteurs (14, 14', 14"), chacun étant configuré pour détecter, dans une direction de détection spécifique (16, 16', 16"), une distance jusqu'auxdits un ou plusieurs fils à plomb, et ainsi fournir des données de déplacement ;
dans lequel au moins deux desdits deux ou plus de deux capteurs (14, 14', 14") sont agencés dans un voisinage de détection desdits un ou plusieurs fils à plomb ;
dans lequel au moins deux desdites directions de détection spécifiques (16, 16', 16") ne sont pas parallèles l'une à l'autre ;
**caractérisé en ce que**
ledit système de surveillance comprend en outre une unité de commande (18) configurée pour recevoir lesdites données de déplacement à partir de deux ou plus de deux desdits capteurs ; et
dans lequel ledit système comprend en outre un moyen pour rapporter à une unité externe (20), un ou plusieurs paramètres représentant un déplacement de la tour d'éolienne.

2. Système de surveillance (100) selon la revendication 1, dans lequel le nombre de fils à plomb (4, 4') est de 1, 2, 3 ou 4; et/ou dans lequel le nombre de capteurs (14, 14', 14") est de 2, 3, 4 ou 5.

3. Système de surveillance (100) selon la revendication 1 ou 2, dans lequel ledit système comprend un et seulement un seul fil à plomb (4) ; et dans lequel ledit système comprend trois capteurs (14, 14', 14") agencés en triangle équilatéral autour dudit fil à plomb quand il est agencé dans une position de repos ; ou dans lequel ledit système comprend un et seulement un seul fil à plomb (4) ; et deux capteurs (14, 14', 14").

4. Système de surveillance (100) selon l'une quelconque des revendications précédentes, dans lequel ledit moyen de mise en suspension (10) comprend indépendamment : une ficelle (22) ou une tige (24); ou une combinaison d'une ficelle (22) et d'une tige (24); comme une tige supérieure (24) et une ficelle inférieure (22), ou une ficelle supérieure (22) et une tige inférieure (24) ; pour suspendre un ou plusieurs desdits un ou plusieurs fils à plomb (4, 4').

5. Système de surveillance (100) selon l'une quelconque des revendications 1-4, dans lequel ledit système est configuré pour rapporter automatiquement à une unité externe (20), une alerte dans le cas où un critère d'alerte prédéterminé est satisfait ; ledit critère d'alerte se rapportant facultativement à une ampleur spécifique de déplacement de la tour d'éolienne.

6. Système de surveillance (100) selon l'une quelconque des revendications 1-5, dans lequel ladite unité externe (20) est un serveur Internet adapté pour recevoir et stocker ledit/lesdits paramètre(s) représentant un déplacement de la tour d'éolienne (2).

7. Dispositif (200) adapté pour être monté sur une paroi interne (34) d'une tour d'éolienne (2) et pour surveiller un déplacement de ladite tour d'éolienne; ledit dispositif comprend un système de surveillance (100) selon l'une quelconque des revendications 1-6 ;
- dans lequel lesdits un ou plusieurs fils à plomb (4, 4') et lesdits deux ou plus de deux capteurs (14, 14', 14") sont enfermés dans un boîtier (36), et dans lequel lesdits un ou plusieurs fils à plomb (4, 4') sont suspendus de manière pivotante dans ledit moyen de mise en suspension (10) à partir d'une partie supérieure dudit boîtier au niveau d'un point de fixation (38) de celui-ci.

8. Dispositif (200) selon la revendication 7, dans lequel ledit boîtier (36) comprend un ou plusieurs moyens de montage (40) pour monter ledit boîtier sur une paroi interne d'une tour d'éolienne (2), lesdits un ou plusieurs desdits un ou plusieurs moyens de montage (40) comprennent facultativement un ou plusieurs aimants.

9. Dispositif (200) selon l'une quelconque des revendications 7- 8, dans lequel ledit boîtier comprend :
- une partie inférieure (46) comprenant lesdits un ou plusieurs fils à plomb (4, 4') et lesdits deux ou plus de deux capteurs (14, 14', 14") ;
- et une partie tubulaire supérieure (48) s'étendant dans une direction verticale à partir d'une ouverture (50) dans une paroi supérieure (52) de ladite partie inférieure (46) ;
dans laquelle ledit moyen de mise en suspension (10) est fixé de manière pivotante à un point de fixation (38) au niveau d'une partie supérieure (54) de ladite partie tubulaire supérieure (48), pour ainsi permettre à ladite partie tubulaire supérieure de recevoir ledit moyen de mise en suspension (10).

10. Utilisation d'un système (100) selon l'une quelconque des revendications 1-6 ou d'un dispositif (200) selon l'une quelconque des revendications 7-9 pour surveiller le déplacement d'un tour d'éolienne (2), de préférence pour déterminer un déplacement entre un élément de base (56) et un élément de fondation (58) d'une tour d'éolienne (2).

11. Procédé de surveillance d'un déplacement d'une tour d'éolienne (2), ledit procédé comprenant :
i) la fourniture d'un ou de plusieurs fils à plomb (4, 4') comprenant chacun une partie supérieure (6) et une partie inférieure (8); chaque fil à plomb étant configuré pour être suspendu de manière pivotante au niveau de sa partie supérieure, via un moyen de mise en suspension (10) ;
ii) la mise en suspension desdits un ou plusieurs fils à plomb (4, 4') à partir d'un point de fixation (38) au niveau d'une paroi interne (34) d'une tour d'éolienne (2) dans un moyen de mise en suspension (10) afin de lui/leur permettre d'atteindre une position de repos dans une situation de repos ;
iii) la fourniture de deux ou plus de deux capteurs (14, 14', 14"), chacun étant configuré pour détecter, dans une direction de détection spécifique (16, 16', 16"), une distance jusqu'auxdits un ou plusieurs fils à plomb (4, 4'), et ainsi fournir des données de déplacement ;
iv) l'agencement desdits deux ou plus de deux capteurs (14, 14', 14") dans un voisinage de détection des desdits un ou plusieurs fils à plomb (4, 4') de manière à ce qu'au moins deux desdites directions de détection (16, 16', 16") ne soient pas parallèles l'une à l'autre ;
**caractérisé en ce que** le procédé comprend en outre :
v) la fourniture d'une unité de commande (18) qui est configurée pour recevoir lesdites données de déplacement à partir de deux ou plus de deux desdits capteurs (14, 14', 14") ; et
vi) le fait de permettre à ladite unité de commande de rapporter automatiquement à une unité externe (20), un paramètre représentant un déplacement de la tour d'éolienne (2).

12. Procédé selon la revendication 11, dans lequel ledit procédé rapporte automatiquement une alerte dans le cas où un critère d'alerte prédéterminé est satisfait ; ledit critère d'alerte se rapportant facultativement à une ampleur spécifique de déplacement de la tour d'éolienne (20).

13. Procédé selon la revendication 11 ou 12 mis en œuvre en utilisant un système (100) selon l'une quelconque des revendications 1-6 ou en utilisant un dispositif (200) selon l'une quelconque des revendications 7-9.

14. Tour d'éolienne (300) comprenant un système (100) selon l'une quelconque des revendications 1-6, ou comprenant un dispositif (200) selon l'une quelconque des revendications 7-9.

15. Éolienne (400) comprenant une tour d'éolienne (300) selon la revendication 14.
